# FASCICULE DE BREVET EUROPEEN

(11) **EP 3 732 105 B1**
(45) Date de publication et mention de la délivrance du brevet: **09.02.2022**
(21) Numéro de dépôt: 18842574.8
(22) Date de dépôt: 28.12.2018
(51) Int. Cl.: B64F 1/22, B64F 1/10

(54) **SYSTÈME D'ASSISTANCE AUX DÉPLACEMENTS AU SOL POUR AÉRONEFS**
BODENMANÖVERUNTERSTÜTZUNGSSYSTEM FÜR FLUGZEUGE
GROUND MANEUVER ASSISTANCE SYSTEM FOR AIRCRAFT

(30) Priorité: 29.12.2017 LU 100634
(43) Date de publication de la demande: 04.11.2020
(73) Titulaire: Oujamaa, Mohamed, Rabat (MA)
(72) Inventeur: Oujamaa, Mohamed, Rabat (MA)
(74) Mandataire: Office Freylinger
(86) Numéro de dépôt international: PCT/IB2018/060674
(87) Numéro de publication internationale: WO 2019/130251

(56) Documents cités:
- WO-A1-2009/037687
- WO-A2-2010/061384
- DE-A1- 4 102 861

## Description

### Domaine technique

La présente invention concerne généralement le domaine des équipements au sol pour l'assistance des aéronefs. La présente invention concerne plus précisément un système d'assistance aux déplacements au sol pour aéronefs, et notamment pour avions.

### Etat de la technique

Le domaine du transport aérien a connu au siècle dernier un développement phénoménal. L'aéronef, et notamment l'avion est devenu aujourd'hui un outil incontournable dans le développement économique et humain de l'ensemble de la planète. Cependant, ce moyen de transport rencontre encore des défis majeurs, par exemple concernant sa sécurité ou la réduction de ses coûts d'exploitation.

La sécurité aérienne s'est beaucoup améliorée au cours des dernières décennies. Après chaque accident, les analyses permettent d'en éviter d'autres en contribuant à l'amélioration des procédés de conception, de fabrication, de maintenance et d'exploitation des aéronefs.

Les accidents lorsqu'ils se produisent restent toutefois spectaculaires et provoquent de nombreuses victimes. Les causes de ces accidents sont désormais identifiées, parmi lesquelles : les conditions météorologiques, comme la neige, le verglas, le brouillard ; l'éclatement de un ou plusieurs pneus du train d'atterrissage ; une défaillance mécanique ; ou encore une défaillance humaine.

On note que la grande majorité des accidents aériens se sont produit lors des phases de décollage ou d'atterrissage, et que beaucoup de ces accidents se sont produit au sol. Les phases de déplacement lorsque l'avion est au sol ou à proximité immédiate du sol sont les plus critiques.

Lors de la phase d'atterrissage, des problèmes peuvent être rencontrés quand l'avion n'arrive pas à stabiliser sa trajectoire ou sa position et qu'il se présente dans une orientation et/ou une direction qui n'est pas parallèle à celle de la piste.

Dans le développement des aéronefs, on recherche donc en plus de l'amélioration des performances énergétiques et d'usure, l'amélioration de la sécurité des vols dans les phases qui comprennent des contacts avec le sol.

On connait des solutions dans l'état de la technique, comme par exemple dans le document FR 2990929, qui met en œuvre une plate-forme sur laquelle un avion peut se poser. La plate-forme comprend un radar et une balise de positionnement pour se synchroniser avec le déplacement d'un avion lors d'une phase d'atterrissage. La plate-forme est mobile grâce à des moteurs alimentés en énergie électrique, et un système de roues en acier circulant sur des rails. Le système intègre des dispositifs de sécurité comme un filet pour retenir un avion.

Ce type de système est avantageux, car il permet de réduire les coûts de carburant consommé par l'avion lors des phases de décollage et d'atterrissage. Il permet aussi d'éviter les problèmes liés à une défaillance du train d'atterrissage. En revanche, ce système ne permet pas de corriger une mauvaise position de l'avion dans les phases d'atterrissage, ni d'assurer les déplacements au sol de l'avion.

Un autre dispositif d'assistance au sol est décrit dans le document publié sous le numéro DE 3034014. Ce document décrit une plate-forme sur laquelle un avion peut se poser ou décoller. La plate-forme est ici mue par un véhicule sur roues. La plate-forme est supportée par des vérins qui permettent de l'incliner pour l'orienter en direction de l'avion au décollage ou à l'atterrissage.

Ce type de plate-forme présente un avantage supplémentaire en étant mieux adapté à la position de l'avion pendant la phase d'atterrissage. En revanche le système décrit ici est destiné à des avions conçus sans train d'atterrissage. Il n'est donc pas adapté pour la majorité des avions en circulation actuellement.

Un autre exemple de l'état de la technique se trouve dans le document EP 2282938. Ce document propose un dispositif d'assistance pour le décollage, l'atterrissage et le garage d'un avion. Le dispositif comprend une propulsion par induction magnétique.

Ce dispositif est également configuré pour remplacer le train d'atterrissage d'un avion et ne s'adapte pas sur les avions actuels. Ce dispositif ne prévoit pas de compenser une mauvaise position de l'avion lors de l'atterrissage. En revanche, ce dispositif prévoit le garage de l'avion en dehors de la piste de décollage. On connaît aussi le document WO2009037687 A1 qui montre le préambule de la revendication 1.

Finalement, un dernier exemple est trouvé dans le document EP 1935785. Ce document propose un dispositif d'assistance au décollage et à l'atterrissage d'un avion. Le dispositif est propulsé par induction magnétique.

Ce dernier dispositif présente les mêmes inconvénients que le précédent, à l'exception de pouvoir s'adapter à un avion comportant un train d'atterrissage.

### Objet de l'invention

L'objet de la présente invention est de remédier aux inconvénients de l'état de la technique avec un système d'assistance au sol permettant d'améliorer la performance et la sécurité des aéronefs dans leur phases de déplacement comprenant des contacts avec le sol, et qui peut être adapté à tous types d'avion.

### Description générale de l'invention

Pour atteindre cet objectif, l'invention propose un système d'assistance aux déplacements au sol pour aéronefs, plus particulièrement pour avions, le système comprenant un chariot entrainé sur une piste par un moyen d'entrainement dont la vitesse peut être adaptée à une vitesse d'atterrissage ou de décollage de l'avion. Le chariot comprend un châssis configuré pour se déplacer sur la piste ; une plate-forme mobile configurée pour supporter l'avion ; et des moyens de connexion de la plate-forme au châssis, configurés pour créer un mouvement relatif entre la plate-forme et le châssis. La plate-forme comprend des moyens de couplage configurés pour saisir et libérer l'avion.

Selon l'invention, les moyens de connexion permettent un déplacement en translation de la plate-forme, selon au moins une direction verticale et une direction transversale à la course du chariot. Les moyens de connexion permettent aussi une rotation de la plate-forme dans l'espace suivant trois axes de rotation perpendiculaires, de manière à orienter la plate-forme dans un plan correspondant à l'angle de décollage ou d'atterrissage de l'avion.

Dans le cadre de l'invention on considérera les déplacements au sol d'un aéronef comme toutes les phases de déplacement de l'aéronef comprenant des contacts avec le sol. Les déplacements au sol comprennent ainsi les phases de décollage, d'atterrissage et de garage ou de circulation au sol.

La translation de la plate-forme suivant une direction transversale à la course du chariot permet de placer la plate-forme sous un avion lors d'une phase d'atterrissage, même si celui-ci n'est pas aligné avec la piste. L'orientation en rotation de la plate-forme permet de mettre la plate-forme en contact avec l'avion quand celui-ci se présente dans un plan non conventionnel au moment de l'atterrissage.

Lors de sa phase d'atterrissage, le système d'assistance au sol selon l'invention est apte à venir se placer à proximité sous un avion, à déplacer la plate-forme au niveau de l'avion en vol et à le saisir. Lors de la phase de décollage, le système permet de propulser et d'accompagner l'avion.

L'avion est physiquement pris en charge dans tous ses déplacements jusqu'à une distance prédéterminée du sol. Le système élimine les risques d'accidents dus à une défaillance du train d'atterrissage comme par exemple un éclatement de pneus. Cela permet aussi de réduire l'usure du train d'atterrissage qui n'est pas utilisé lorsque l'avion se déplace dans un aéroport équipé du système selon l'invention.

Le système selon l'invention autorise également la suppression d'une partie des systèmes embarqués dans l'avion qui ne servent qu'au décollage et à l'atterrissage, comme par exemple le train d'atterrissage ou les systèmes de freinage et de direction au sol.

De surcroit, le système libère les équipages des aéronefs des contraintes et du stress liés aux procédures de décollage et d'atterrissage.

Avantageusement, le chariot est lié de manière amovible au moyen d'entrainement. Par exemple, le chariot peut être tiré ou poussé par une locomotive. Dans ces modes de réalisation, le moyen d'entrainement peut être utilisé pour entrainer plusieurs chariots correspondant à différents types d'aéronefs. Le moyen d'entrainement peut être affecté à un chariot lorsqu'un autre est en stationnement pour optimiser son utilisation. Un autre avantage est la simplification des opérations de maintenances qui n'imposeront pas l'immobilisation d'un chariot.

De préférence, les moyens d'entrainement comprennent une locomotive électrique qui pousse ou tire le chariot. Dès que l'avion est saisi par le système d'assistance, l'avion peut ainsi couper ses moteurs. La pollution atmosphérique liée aux combustions d'énergies fossiles est réduite grâce à l'utilisation d'énergie électrique. Cela permet aussi de réduire les nuisances sonores car les moteurs électriques sont plus silencieux que, par exemple, des moteurs à réacteurs.

Un autre avantage de la propulsion électrique est l'absence de réservoir de stockage de carburant dans le système, impliquant moins de poids à déplacer et moins de risques d'inflammation ou d'explosion en cas d'accident.

Dans des modes de réalisation avantageux, le système comprend en outre des rails installés sur la piste, et le châssis du chariot circule sur les rails. L'utilisation de rails qui définissent la piste et les chemins empruntés par le système réduit les risques de collisions au sol en imposant, par exemple, des sens de circulation. La circulation sur rail permet aussi de construire des pistes sur des terrains peu aménagés, voir accidentés.

De préférence, le chariot est entrainé par induction magnétique. Le transport par induction magnétique permet au chariot d'atteindre une vitesse élevée sur une distance relativement courte. La longueur de la piste est alors réduite par rapport à une piste traditionnelle.

Avantageusement, les moyens de connexion comprennent au moins un rail embarqué, et un système permettant de transporter la plate-forme sur le rail embarqué, en translation suivant une direction transversale à la course du chariot. Le rail embarqué sur le chariot permet un déplacement plus précis et qui peut être implémenté avec des solutions comportant des moteurs simples et connus.

Avantageusement, les moyens de connexion comprennent au moins trois vérins hydrauliques ou pneumatiques connectés à la plate-forme en trois points distincts et permettant l'orientation en rotation de la plate-forme. L'utilisation de vérins permet une implémentation simple avec des systèmes connus et qui fournit une robustesse suffisante pour le soutien d'un avion de transport de passagers.

Dans des modes de réalisation préférés, les moyens de connexion comprennent un palier de type couronne d'orientation horizontal qui autorise la rotation de la plate-forme autour d'un axe vertical. Les couronnes d'orientation sont des paliers adaptés à supporter de fortes charges axiales en autorisant des mouvements de rotation de précision.

Avantageusement, les moyens de connexions comprennent en outre un arbre de transmission vertical connecté à la plate-forme par une liaison rotule, configuré pour commander la translation verticale de la plate-forme. En plus de fournir une translation verticale avec une implémentation simple, l'arbre de transmission améliore la rigidité du système

De préférence, les moyens de connexion comprennent un ou plusieurs moyens d'amortissement des chocs. Les moyens d'amortissement entrent en action lors du contact entre l'avion et la plate-forme au moment de l'atterrissage. Ils assurent un meilleur confort d'atterrissage et réduisent les risques de chocs pouvant entrainer des dégâts matériels ou des usures prématurées des éléments de l'avion.

Dans des modes de réalisation, les moyens de couplage sont adaptés pour saisir et libérer le train d'atterrissage de l'avion et/ou un élément de fuselage de l'avion. Le système peut saisir le train d'atterrissage des avions conventionnels, ou un autre élément pour des avions conçus spécialement sans train d'atterrissage. Le système peut aussi être configuré pour saisir l'avion directement sur le fuselage lorsque le déploiement du train d'atterrissage a échoué.

Dans des modes de réalisation préférentiels, le système comprend en outre un véhicule de secours qui emmène des instruments d'assistance en cas d'accident ou d'incendie. Le véhicule de secours est immédiatement présent sur les lieus lors d'un accident au moment de l'atterrissage ou du décollage. En cas de besoin, une intervention est rapide et contribue à l'amélioration de la sécurité des éventuels passagers.

De préférence, le chariot comprend en outre des moyens d'alimentation en énergie électrique de l'aéronef. L'aéronef a alors la possibilité de s'appuyer sur l'alimentation électrique de la plate-forme pour économiser ou recharger ses batteries.

Avantageusement, le système comprend en outre un module de commande qui peut être commandé à distance pour le déplacement du chariot et/ou l'orientation de la plate-forme. Le personnel au sol peut alors commander le démarrage de l'avion depuis un poste de control commun à plusieurs chariots.

Selon des modes de réalisation préférés, le système est adapté pour transporter l'avion jusqu'à et depuis une position de garage. Le système permet alors d'assister l'aéronef dans tous ses déplacements au sol. L'avion n'a plus besoin de moyens moteur au sol.

Un autre aspect de l'invention concerne un procédé d'assistance au sol pour l'atterrissage d'un aéronef, plus particulièrement d'un avion, avec un système selon l'invention, le procédé comprenant les étapes de :
placer le chariot en bout de piste avec les moyens de connexions en position initiale avec la plate-forme horizontale ;
accélérer le chariot suivant une ligne droite jusqu'à une vitesse correspondant à la vitesse d'atterrissage de l'avion ;
stabiliser le chariot à la même vitesse que l'avion ;
commander les moyens de connexions de manière à déplacer la plateforme sous l'avion ;
commander les moyens de connexion de manière à mettre les moyens de couplage en contact avec les éléments correspondant de l'avion ;
saisir l'avion avec les moyens de couplage ;
commander les moyens de connexion en position initiale, de manière à placer l'avion sur un plan horizontal ;
freiner l'avion jusqu'à une vitesse de circulation sur la piste.

La position initiale des moyens de connexion est une position dans laquelle la plate-forme est horizontale et centrée sur le châssis. La position initiale est une position adaptée à la circulation du chariot transportant un avion. De préférence la position initiale est la position dans laquelle le chariot est le plus compact avec un encombrement minimal.

Avantageusement, le procédé comprend en outre l'étape de :
après avoir freiné l'avion jusqu'à une vitesse de circulation sur la piste, procéder au garage de l'avion en entrainant le chariot à la vitesse de circulation jusqu'à une zone de garage.

La zone de garage peut être par exemple, une zone d'embarquement, de débarquement, un abri ou un atelier de maintenance.

Un autre aspect de l'invention concerne un procédé d'assistance au sol pour le décollage d'un aéronef, plus particulièrement d'un avion, avec un système selon l'invention, le procédé comprenant les étapes de :
placer le chariot en bout de piste avec les moyens de connexions en position initiale, avec la plate-forme horizontale, et l'avion fixé aux moyens de couplage ;
accélérer le chariot suivant une ligne droite jusqu'à une vitesse correspondant à la vitesse de décollage de l'avion ;
commander les moyens de connexions de manière à incliner l'avion en position de décollage ;
une fois la vitesse de décollage atteinte, libérer l'avion au moyen des moyens de couplage.

Avantageusement, le procédé d'assistance au sol pour le décollage d'un aéronef, comprend en outre l'étape de :
après le décollage de l'avion continuer à déplacer le chariot sous l'avion de manière à pouvoir procéder à un atterrissage en cas d'urgence.

Si l'avion connait une panne ou un problème qui l'empêche de compléter son décollage et que l'avion doit revenir au sol, le chariot est alors encore proche et il est possible de saisir l'avion pour procéder à un atterrissage d'urgence. Cette étape est une mesure de sécurité supplémentaire.

D'une manière générale et au-delà des avantages particuliers déjà mentionnés au niveau de la sécurité, des atouts majeurs de la présente invention sont notamment l'économie significative de carburant (moteurs éteints depuis le toucher à l'atterrissage jusqu'au décollage), la réduction très significative du niveau de pollution atmosphérique et sonore et des gains au niveau de la maintenance.

### Description détaillée à l'aide des figures

D'autres particularités et caractéristiques de l'invention ressortiront de la description détaillée d'au moins un mode de réalisation avantageux présenté ci-dessous, à titre d'illustration, en se référant aux dessins annexés. Ceux-ci montrent :
Figure 1 : une représentation schématique d'une vue de côté d'un mode de réalisation préféré du chariot d'un système d'assistance aux déplacements au sol selon l'invention ;
Figure 2 : une représentation schématique d'une vue de dessus du système de la Figure 1 ;
Figure 3 : une représentation schématique d'une vue de dessus d'un mode de réalisation préféré d'un système d'assistance aux déplacements au sol selon l'invention ;
Figure 4 : une vue de dessus d'un aéroport comprenant un mode de réalisation d'un système d'assistance aux déplacements au sol selon l'invention ;
Figure 5a : une vue de côté d'une étape consistant à accélérer le chariot suivant une ligne droite jusqu'à une vitesse correspondant à la vitesse d'atterrissage de l'avion, d'un mode de réalisation préféré du procédé d'assistance au sol pour l'atterrissage selon l'invention ;
Figure 5b : une vue de côté d'une étape consistant à freiner l'avion jusqu'à une vitesse de circulation sur la piste, du procédé de la Figure 5a ;
Figure 6a : une vue de côté d'une étape consistant à accélérer le chariot suivant une ligne droite jusqu'à une vitesse correspondant à la vitesse de décollage de l'avion, d'un mode de réalisation préféré du procédé d'assistance au sol pour le décollage selon l'invention ;
Figure 6b : une vue de côté d'une étape consistant à une fois la vitesse de décollage atteinte, libérer l'avion au moyen des moyens de couplage, du procédé de la Figure 5a.

Le système d'assistance de déplacements au sol pour aéronefs est décrit ici pour l'assistance d'avions de type avion de ligne pour le transport des passagers, mais il pourrait être adapté pour l'assistance au sol d'autres types d'aéronefs.

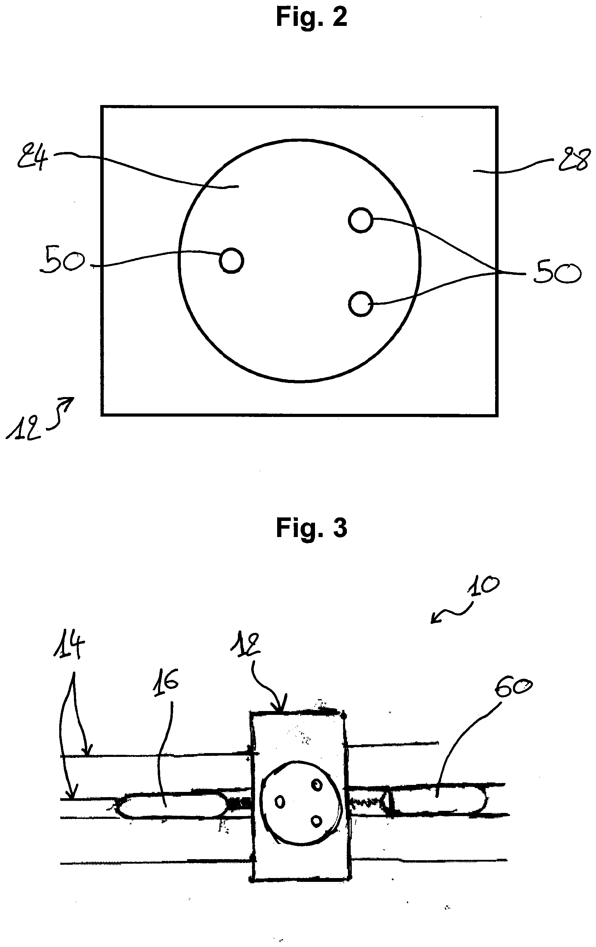

Le système d'assistance au sol 10 montré à la Figure 3 comprend un chariot 12 configuré pour se déplacer sur une piste constituée de rails 14. On comprendra que la piste n'est pas limitée à une voie de rails mais peut être tout type de surface permettant le déplacement du chariot.

Le chariot 12 est entrainé par un moyen d'entrainement. Tout moyen d'entrainement approprié peut être utilisé pour entrainer le chariot, par exemple, le moyen d'entrainement peut être un moteur intégré dans le chariot 12. Le moyen d'entrainement est ici une locomotive 16, accrochée au chariot 12. La locomotive 16 permet de tirer le chariot 12 à une vitesse variable qui peut être adaptée à la vitesse d'atterrissage ou de décollage de l'avion. On préférera une locomotive dotée d'un moteur électrique.

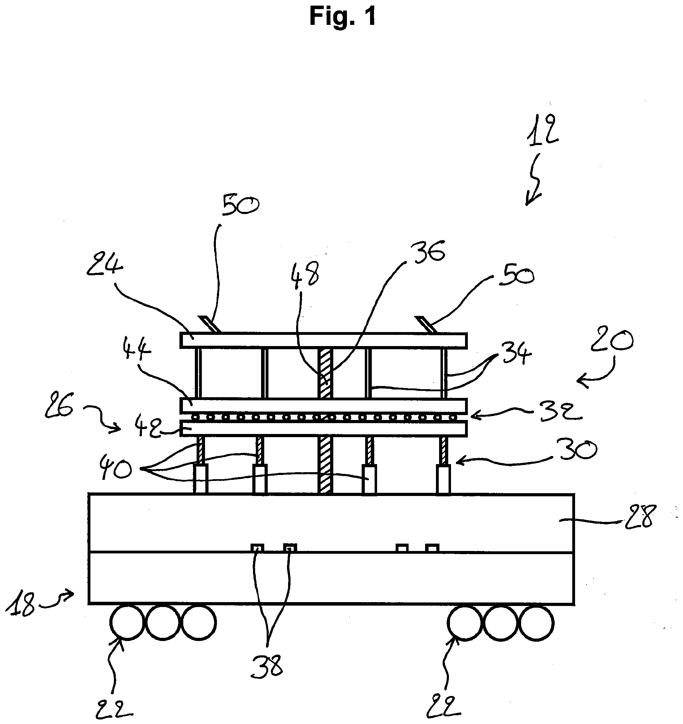

Le chariot 12 comprend un châssis 18 soutenant une plate-forme 20, montrés à la Figure 1. Le châssis 18 repose sur la piste et forme une interface entre la plateforme et la piste. La largeur du châssis 18 peut être au moins égale à celle d'une piste d'atterrissage traditionnelle, sans toutefois couvrir d'éventuels éclairages au sol.

Le châssis 18 comprend ici deux bogies 22 schématisés dans la Figure 1 par des roues et qui permettent au châssis de circuler sur les rails 14. Les bogies 22 sont équipés de freins (non montrés).

La plate-forme a pour rôle de saisir ou de libérer l'avion selon que l'on est dans une phase d'atterrissage ou de décollage. Selon un aspect important de l'invention, la plate-forme 20 est mobile par rapport au châssis 18 qui la soutient, de manière à pouvoir se présenter dans un plan parallèle au plan de l'avion en vol au moment de l'atterrissage, et de manière à orienter l'avion au moment du décollage. Ainsi la plate-forme 20 peut être déplacée selon une direction verticale et une direction transversale à la course du chariot, et la plate-forme 20 peut être mise en rotation par rapport au châssis suivant trois axes de rotation perpendiculaires.

La plate-forme 20 étant destinée à porter l'avion, les éléments de la plateforme sont dimensionnés pour résister aux forces exercées par un avion dans une phase décollage, d'atterrissage, ou de garage.

La plate-forme 20 comprend un plateau supérieur 24, et des moyens de connexion mobiles 26 qui lient le plateau supérieur 24 au châssis 18.

Les moyens de connexion 26 comprennent, entre le châssis 18 et le plateau supérieur 24, un plateau inférieur 28, un ensemble de vérins 30, un palier 32, des bielles articulées 34 et un arbre de transmission 36. La disposition des différents éléments va être présentée ici de bas en haut, depuis le châssis 18 vers le plateau supérieur 24, mais d'autres dispositions sont envisageables.

Le plateau inférieur 28 est un plateau carré qui repose sur le châssis 18. Le plateau inférieur 28 recouvre ici le châssis 18, mais d'autres formes ou dimension du plateau inférieur 28 peuvent être envisagées.

La liaison entre le plateau inférieur 28 et le châssis 18 est réalisée par des rails embarqués 38. Les rails 38 sont orientés dans une direction perpendiculaire à celle des bogies 22, c'est-à-dire dans une direction transversale à la course du chariot. Le plateau inférieur 28 comprend des roues montées sur les rails embarqués 38 et un ou des moteurs (non montrés) qui permet d'entrainer les roues et de déplacer le plateau inférieur 28 dans les deux sens le longs des rails 38.

Le plateau inférieur 28 supporte l'ensemble de vérins 30. L'ensemble de vérins 30 comprend une pluralité de vérins 40 pneumatiques, ou hydrauliques montés entre le plateau inférieur 28 et le palier 32. Chaque vérin 40 est monté fixe sur le plateau inférieur 28 et connecté par exemple par une liaison rotule au palier 32.

Les vérins 40 sont connectés à un système d'alimentation embarqué (non montré) qui est préférentiellement monté sur le plateau inférieur 28.

L'ensemble de vérins 30 comprend ici quatre vérins 40 disposés de manière régulière suivant un cercle, de préférence concentrique avec le plateau inférieur 28. L'ensemble de vérins 30 peut comprendre un nombre différent de vérins 40, avec un minimum de trois vérins.

Chaque vérin 40 est actionnable individuellement avec une commande respective. L'action simultanée des vérins 40 suivant des courses et/ou des directions différentes permet de modifier l'orientation du plan du palier 32 par rapport à l'horizontale. La disposition régulière des vérins suivant un cercle permet de réaliser facilement une inclinaison dans un plan donné.

Le palier 32 est un palier annulaire qui comporte deux plaques annulaires planes parallèles : une plaque inférieure fixe 42 ; et une plaque supérieure mobile 44. La plaque fixe 42 est liée à l'ensemble de vérins 30.

Le palier 32 est un palier de type couronne d'orientation qui n'est pas monté sur un arbre. Il permet la rotation relative d'une plaque par rapport à l'autre, suivant un axe perpendiculaire au plan défini par l'ensemble de vérins 30.

De préférence, la rotation des deux plaques du palier 32 est assurée par un moyen d'entrainement en rotation (non montré) comme par exemple un motoréducteur qui entraine des pignons intérieurs du palier.

La plaque mobile 44 sert de support pour le plateau supérieur 24 du chariot. La plaque mobile 44 et le plateau supérieur 24 sont liés par une pluralité de bielles articulées 34 disposées régulièrement en cercle sur la circonférence de la plaque mobile 44. Les bielles 34 sont montées en liaisons rotules à la fois sur le plateau supérieur 24 et sur la plaque mobile 44. Les bielles 34 permettent la transmission de l'orientation du palier 32 vers le plateau supérieur 24.

Les moyens de connexion 26 comprennent en outre un arbre de transmission 36 monté vertical entre le plateau inférieur 28 et le plateau supérieur 24. L'arbre de transmission 36 traverse le centre du palier annulaire 32. La course des vérins 40 est configurée pour que l'arbre de transmission ne vienne jamais en contact avec le palier 32. L'arbre de transmission 46 est lié au plateau supérieur 24 par exemple, par une liaison de type rotule qui autorise toutes les rotations. L'arbre de transmission 36 comprend un filetage 48 qui traverse un trou taraudé (non montré) dans le plateau inférieur 28.

L'arbre de transmission 36 peut être mis en rotation par un moteur (non montré) compris dans le plateau inférieur 28. La rotation de l'arbre de transmission 36 dans le trou taraudé provoque la montée ou la descente de celui-ci et entraine également le plateau supérieur 24.

L'arbre de transmission 36 a aussi une fonction de rigidification de la structure des moyens de connexion 26.

Le plateau supérieur 24 est ici un plateau circulaire, bien que d'autres formes soient envisageables. Le plateau supérieur 24 comprend des moyens de couplage 50 configurés pour saisir et libérer l'avion.

Les moyens de couplage 50 sont configurés soit pour se connecter avec des trains d'atterrissage classique de l'avion, soit pour se connecter à des points prédéfinis du fuselage ou d'une autre partie de l'avion ou une combinaison de ces solutions. Tout moyen de couplage adapté peut être utilisé. Comme montré à la Figure 2, le plateau 24 comprend trois moyens de couplages destinés à se connecter au trois roues du train d'atterrissage de l'avion.

Le plateau supérieur 24 peut aussi comprendre des moyens de balisage ou d'éclairage pour assister l'approche de l'avion.

Le chariot 12 comprend en outre des moyens d'amortissement des chocs (non montrés) qui permettent d'atténuer le choc potentiel lors du couplage entre le chariot et l'avion. Ces moyens d'amortissement peuvent être installés indifféremment dans le châssis 18 ou dans une autre partie du chariot 12.

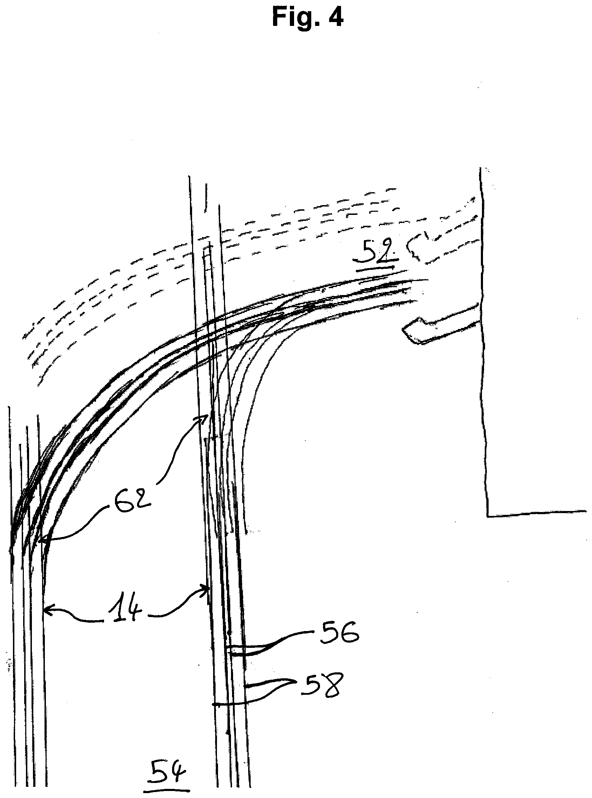

Comme montré à la Figure 4, le système d'assistance au sol 10 comprend une pluralité de rails 14 qui assurent le guidage du chariot depuis une zone de garage 52 jusqu'au bout des pistes 54 de décollage et d'atterrissage. Les rails 14 constituent des voies qui communiquent par des aiguillages 62 de manière à fournir plusieurs possibilités de circulation différentes. On peut considérer pour chaque trajectoire, une paire de rails plus rapprochée 56 pour la locomotive 16 et une paire de rails plus écartée 58 pour le chariot 12.

Grace à ces différents parcours de rails, la locomotive 16 peut tirer le chariot 12 jusqu'à la zone de garage 52 comme par exemple une zone de débarquement, puis se décrocher et aller chercher un autre chariot portant un avion dans une zone d'embarquement pour l'assister dans son décollage. La locomotive 16 peut servir de système d'entrainement pour plusieurs chariots.

Le système d'assistance au sol 10 peut inclure en outre différents systèmes non montrés parmi lesquels : des moyens de positionnement et de synchronisation de la plate-forme par rapport à un avion en phase d'atterrissage, et un module de commande qui peut être commandé à distance pour le déplacement du chariot et/ou l'orientation de la plate-forme.

Le système inclut par exemple un radar embarqué sur le chariot; un calculateur, de préférence embarqué sur la plate-forme ; des moyens de communication avec l'avion ; une ou plusieurs balises de positionnement, implantées sur le plateau supérieur, et un système de détection capable de repérer la position et l'orientation des éléments de l'avion apte à s'accoupler avec les moyens de couplage de la plate-forme.

Avantageusement, le système comprend en outre un véhicule de secours 60 tiré par le chariot et la locomotive, comme montré à la Figure 3. Le véhicule de secours emmène des instruments d'assistance en cas d'accident ou d'incendie de l'avion comme par exemple des lances à incendies. Le véhicule peut aussi transporter des personnes comme des pompiers.

Ainsi en cas d'accident au décollage ou à l'atterrissage de l'avion, les secours sont présents sans délais à proximité de l'avion.

Selon les variantes, le chariot 12 embarque un générateur électrique et permet d'alimenter l'avion en électricité tant que celui-ci est en contact avec la plate-forme.

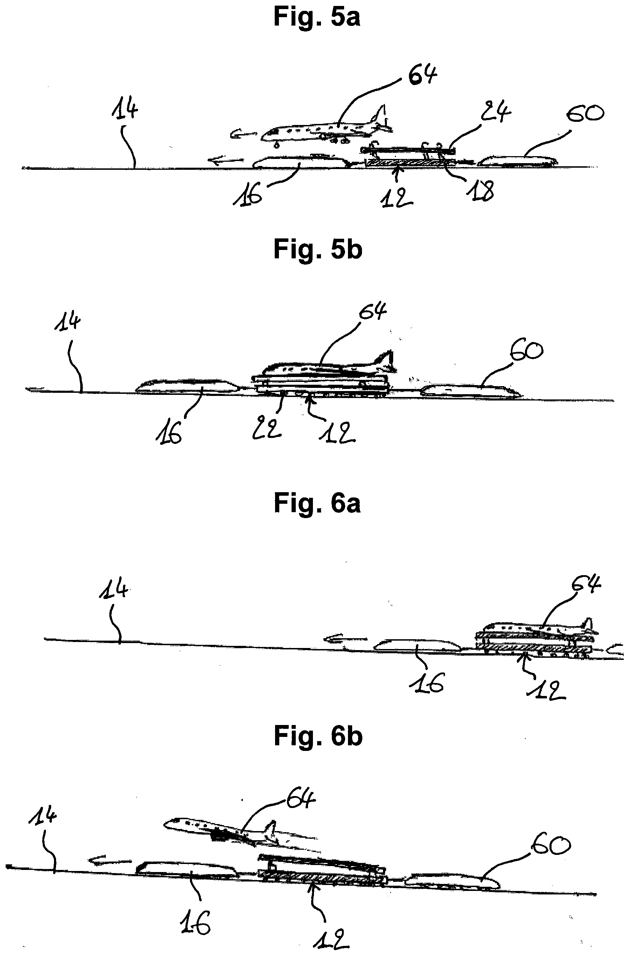

Des modes de réalisation préférés de procédés d'assistance au sol pour l'atterrissage, pour le décollage, et pour le garage d'un avion vont maintenant être décrits en référence aux Figures 5a, 5b, 6a, et 6b.

Avant l'atterrissage d'un avion 64, la locomotive 16, le chariot 12 et le véhicule de secours 60 sont positionnés en bout de piste la piste en attente. Les moyens de connexions 26 entre la plate-forme 20 et le châssis 18 du chariot 12 sont dans une position initiale dans laquelle le plateau supérieur 24 est horizontal, au plus bas, et substantiellement positionné au-dessus du centre du châssis 18.

Comme montré à la Figure 5a, à l'arrivée de l'avion 64, la locomotive 16 accélère sur la piste en ligne droite. Les balises de positionnement sont activées, la vitesse et la position d'approche de l'avion 64 sont évaluées.

La locomotive 16 lance le chariot 12 à une vitesse correspondante à la vitesse de l'avion et de manière à positionner le chariot au plus près de l'avion 64, puis la locomotive 16 stabilise alors le chariot 12 à la même vitesse que l'avion 64.

Les moyens de connexions 26 entre la plate-forme 20 et le châssis 18 du chariot sont alors commandés de manière à déplacer le plateau supérieur 24 sous l'avion 64. Cette première étape est réalisée si nécessaire par un déplacement du plateau inférieur 28 sur les rails embarqués 38 dans une direction transversale à la course du chariot 12. Ensuite, selon la position et l'orientation de l'avion, l'arbre de transmission est mis en rotation de manière à monter le plateau supérieur 24 à la hauteur de l'avion 64, et/ou les vérins 40 sont commandés de manière à orienter le plan du plateau supérieur 24 de la plateforme 20 dans le même plan que celui formé par les trois roues du train d'atterrissage de l'avion 64 et à mettre les moyens de couplage 50 en contact avec les éléments correspondants de l'avion. Pendant cette phase, l'avion 64 peut être maintenu à une vitesse et une position constante au-dessus de la piste, sous réserve de se trouver sous une altitude maximale d'assistance qui correspond à la hauteur d'élévation maximale du plateau supérieur 24.

Une fois les moyens de couplage 50 mis en contact avec le train d'atterrissage de l'avion 64, ceux-ci sont actionnés de manière à saisir fermement le train d'atterrissage.

Dès que le couplage entre les moyens de couplage 50 et le train d'atterrissage est fermement sécurisé, les moyens de connexions 26 entre la plate-forme 20 et le châssis 18 du chariot 12 sont rappelés dans leur position initiale en emmenant l'avion 64, comme montré à la Figure 5b. A ce stade, l'avion 64 peut couper ses moyens de propulsion et se connecter à l'alimentation en électricité fournie par le chariot 12.

Puis le chariot 12 est freiné par l'action conjuguée de la locomotive 16 et des freins intégrés aux bogies 22. Le freinage peut se faire par freinage régénératif en convertissant une grande partie de l'énergie cinétique de l'ensemble chariot et locomotive, mais également celle de l'avion en énergie électrique, notamment en utilisant les moteurs du moyen d'entrainement en mode générateur. Le ralentissement complet de l'avion 64 est terminé lorsque le chariot atteint une vitesse prédéterminée de circulation. La locomotive 16 emmène alors le chariot 12 vers une zone de garage, typiquement une zone de débarquement de l'avion.

Lors du garage de l'avion, la locomotive suit la voie de rails 14 à travers les aiguillages 62 en tirant le chariot à la vitesse de circulation jusqu'à la zone de garage 52. La vitesse de circulation est déterminée pour offrir le meilleur compromis entre le confort des occupants de l'avion et un temps de déplacement minimum.

Pour utiliser le système 10 lors du décollage d'un avion 64, la locomotive 16 vient chercher le chariot 12 et le véhicule de secours 60 dans une zone de garage, typiquement une zone d'embarquement, et les transportent jusqu'à la piste. L'avion 64 est fermement maintenu sur la plate-forme 20, et les moyens de connexions 26 de la plate-forme 20 sont en position initiale comme décrit plus haut.

La locomotive 16 accélère alors le chariot 12 sur la piste de décollage en ligne droite jusqu'à une vitesse de décollage prédéterminée comme montré à la Figure 6a.

Lors de la phase d'accélération, les réacteurs de l'avion peuvent être activés de pour se préparer à effectuer sa poussée de décollage. Les vérins 40 des moyens de connexion 26 peuvent alors être commandés pour incliner l'avion dans une position de décollage.

Lorsque la vitesse de décollage prédéterminée est atteinte, les moyens de couplage 50 de la plate-forme 20 sont activés de manière à libérer les trains d'atterrissage de l'avion et la poussée des réacteurs sur l'avion 64 peut s'exercer librement pour provoquer le décollage de l'avion 64 comme montré à la Figure 6b.

Par mesure de sécurité, le chariot 12 continue à la vitesse de l'avion 64 de manière à suivre celui-ci sur une distance supplémentaire. En cas de panne au décollage, la plate-forme peut ainsi saisir l'avion de nouveau d'une manière similaire à une procédure d'atterrissage.

Une fois que l'avion 64 est suffisamment éloigné de la piste, la locomotive 16 et le chariot 12 freinent pour revenir à une vitesse de circulation, et les moyens de connexions 26 entre la plate-forme 20 et le châssis 18 du chariot 12 sont rappelés dans leur position initiale.

On remarque que dans l'espace qui correspond à l'aéroport, l'avion est en permanence porté par un chariot. On peut donc facilement concevoir la création d'avions adaptés, ne comportant pas de train d'atterrissage.

**Légende des références**

| | |
|---|---|
| 10 | système d'assistance au sol |
| 12 | chariot |
| 14 | rails |
| 16 | locomotive |
| 18 | châssis |
| 20 | plate-forme |
| 22 | bogies |
| 24 | plateau supérieur |
| 26 | moyens de connexion mobiles |
| 28 | plateau inférieur |
| 30 | ensemble de vérins |
| 32 | palier |
| 34 | bielles articulées |
| 36 | arbre de transmission |
| 38 | rails embarqués |
| 40 | vérins |
| 42 | plaque inférieure fixe |
| 44 | plaque supérieure mobile |
| 46 | arbre de transmission |
| 48 | filetage |
| 50 | moyens de couplage |
| 52 | zone de garage |
| 54 | pistes |
| 56 | rails plus rapprochés |
| 58 | rails plus écartés |
| 60 | véhicule de secours |
| 62 | aiguillages |

## Revendications

1. Système d'assistance aux déplacements au sol pour aéronefs, plus particulièrement pour avions, le système comprenant :
un chariot entrainé sur une piste par un moyen d'entrainement dont la vitesse peut être adaptée à la vitesse d'atterrissage ou de décollage de l'avion,
le chariot comprenant un châssis configuré pour se déplacer sur la piste ;
une plate-forme mobile configurée pour supporter l'avion, la plate-forme comprenant des moyens de couplage configurés pour saisir et libérer l'avion ;
et des moyens de connexion de la plate-forme au châssis, configurés pour créer un mouvement relatif entre la plate-forme et le châssis ;
**caractérisé en ce que** les moyens de connexion permettent un déplacement en translation de la plate-forme, selon au moins une direction verticale et une direction transversale à la course du chariot ;
et **en ce que** les moyens de connexion permettent aussi une rotation de la plate-forme dans l'espace suivant trois axes de rotation perpendiculaires, de manière à orienter la plate-forme dans un plan correspondant à l'angle de décollage ou d'atterrissage de l'avion.

2. Système d'assistance aux déplacements au sol selon la revendication 1, dans lequel le chariot est lié de manière amovible au moyen d'entrainement.

3. Système d'assistance aux déplacements au sol selon la revendication 2, dans lequel les moyens d'entrainement comprennent une locomotive électrique qui pousse ou tire le chariot.

4. Système d'assistance aux déplacements au sol selon l'une quelconque des revendications précédentes, dans lequel le système comprend en outre des rails installés sur la piste, et le châssis du chariot circule sur les rails.

5. Système d'assistance aux déplacements au sol selon l'une quelconque des revendications précédentes, dans lequel le chariot est entrainé par induction magnétique.

6. Système d'assistance aux déplacements au sol selon l'une quelconque des revendications précédentes, dans lequel les moyens de connexion comprennent au moins un rail embarqué et un système permettant de transporter la plate-forme sur le rail en translation suivant une direction transversale à la course du chariot, et/ou dans lequel les moyens de connexion comprennent au moins trois vérins hydrauliques ou pneumatiques connectés à la plateforme en trois points distincts et permettant l'orientation en rotation de la plate-forme, et/ou dans lequel les moyens de connexion comprennent un palier de type couronne d'orientation horizontal qui autorise la rotation de la plate-forme autour d'un axe vertical, et/ou dans lequel les moyens de connexion comprennent un arbre de transmission vertical connecté à la plate-forme par une liaison rotule, qui permet la translation verticale de la plate-forme, et/ou dans lequel les moyens de connexion comprennent un ou plusieurs moyens d'amortissement des chocs.

7. Système d'assistance aux déplacements au sol selon l'une quelconque des revendications précédentes, dans lequel les moyens de couplage sont adaptés pour saisir et libérer le train d'atterrissage de l'avion et/ou un élément de fuselage de l'avion.

8. Système d'assistance aux déplacements au sol selon l'une quelconque des revendications précédentes, dans lequel le système comprend en outre un véhicule de secours qui emmène des instruments d'assistance en cas d'accident ou d'incendie de l'avion.

9. Système d'assistance aux déplacements au sol selon l'une quelconque des revendications précédentes, dans lequel le chariot comprend en outre des moyens d'alimentation en énergie électrique de l'aéronef.

10. Système d'assistance aux déplacements au sol selon l'une quelconque des revendications précédentes, dans lequel le système comprend en outre un module de commande qui peut être commandé à distance pour le déplacement du chariot et/ou l'orientation de la plate-forme.

11. Système d'assistance aux déplacements au sol selon l'une quelconque des revendications précédentes, dans lequel le système est adapté pour transporter l'avion jusqu'à et depuis une position de garage.

12. Procédé d'assistance au sol pour l'atterrissage d'un aéronef, plus particulièrement d'un avion, avec un système selon l'une quelconque des revendications 1 à 11, le procédé comprenant les étapes de :
placer le chariot en bout de piste avec les moyens de connexions en position initiale avec la plate-forme horizontale ;
accélérer le chariot suivant une ligne droite jusqu'à une vitesse correspondant à la vitesse d'atterrissage de l'avion ;
stabiliser le chariot à la même vitesse que l'avion ;
commander les moyens de connexions de manière à déplacer la plateforme sous l'avion ;
commander les moyens de connexion de manière à mettre les moyens de couplage en contact avec les éléments correspondant de l'avion ;
saisir l'avion avec les moyens de couplage ;
commander les moyens de connexion en position initiale, de manière à placer l'avion sur un plan horizontal ;
freiner l'avion jusqu'à une vitesse de circulation sur la piste.

13. Procédé d'assistance au sol à pour l'atterrissage d'un aéronef, selon la revendication 12, le procédé comprenant en outre l'étape de :
après avoir freiné l'avion jusqu'à une vitesse de circulation sur la piste, procéder au garage de l'avion en entrainant le chariot à la vitesse de circulation jusqu'à une zone de garage.

14. Procédé d'assistance au sol pour le décollage d'un aéronef, plus particulièrement d'un avion, avec un système selon l'une quelconque des revendications 1 à 11, le procédé comprenant les étapes de :
placer le chariot en bout de piste avec les moyens de connexions en position initiale, avec la plate-forme horizontale, et l'avion fixé aux moyens de couplage ;
accélérer le chariot suivant une ligne droite jusqu'à une vitesse correspondant à la vitesse de décollage de l'avion ;
commander les moyens de connexions de manière à incliner l'avion en position de décollage ;
une fois la vitesse de décollage atteinte, libérer l'avion au moyen des moyens de couplage.

15. Procédé d'assistance au sol pour le décollage d'un aéronef, selon la revendication 14, le procédé comprenant en outre l'étape de :
après le décollage de l'avion continuer à déplacer le chariot sous l'avion de manière à pouvoir procéder à un atterrissage en cas d'accident.

## Patentansprüche

1. System zur Unterstützung von Bodenbewegungen für Luftfahrzeuge, insbesondere für Flugzeuge, wobei das System Folgendes umfasst:
einen Wagen, der auf einer Bahn von einem Antriebsmittel angetrieben wird, dessen Geschwindigkeit an die Lande- oder Startgeschwindigkeit des Flugzeugs angepasst werden kann,
wobei der Wagen Folgendes umfasst: ein Fahrwerk, das für die Fortbewegung auf der Bahn konfiguriert ist; eine mobile Plattform, die für das Tragen des Flugzeugs konfiguriert ist; wobei die Plattform Kopplungsmittel umfasst, die für das Greifen und Freigeben des Flugzeugs konfiguriert sind;
und Mittel zur Verbindung der Plattform mit dem Fahrwerk, die so konfiguriert sind, dass sie eine Relativbewegung zwischen der Plattform und dem Fahrwerk erzeugen;
**dadurch gekennzeichnet, dass**
die Verbindungsmittel eine Translation der Plattform ermöglichen, gemäß mindestens einer vertikalen Richtung und einer zu dem Lauf des Wagens verlaufenden Querrichtung;
und dadurch, dass
die Verbindungsmittel auch eine Drehung der Plattform im Raum gemäß drei senkrechter Drehachsen ermöglichen, um die Plattform in einer Ebene auszurichten, die mit dem Start- oder Landewinkel des Flugzeugs übereinstimmt.

2. System zur Unterstützung von Bodenbewegungen nach Anspruch 1, wobei der Wagen mit dem Antriebsmittel lösbar verbunden ist.

3. System zur Unterstützung von Bodenbewegungen nach Anspruch 2, wobei die Antriebsmittel eine Elektrolokomotive umfassen, die den Wagen schiebt oder zieht.

4. System zur Unterstützung von Bodenbewegungen nach einem der vorangehenden Ansprüche, wobei das System zusätzlich auf der Bahn eingebaute Schienen umfasst und das Fahrwerk des Wagens auf den Schienen fährt.

5. System zur Unterstützung von Bodenbewegungen nach einem der vorangehenden Ansprüche, wobei der Wagen durch magnetische Induktion angetrieben wird.

6. System zur Unterstützung von Bodenbewegungen nach einem der vorangehenden Ansprüche, wobei die Verbindungsmittel mindestens eine Bordschiene und ein System umfassen, das es ermöglicht, die Plattform auf der Schiene translatorisch gemäß einer Richtung zu transportieren, die quer zu dem Lauf des Wagens verläuft und/oder wobei die Verbindungsmittel mindestens drei Hydraulik- oder Druckluftzylinder umfassen, die mit der Plattform an drei getrennten Punkten verbunden sind und die Drehausrichtung der Plattform ermöglichen, und/oder wobei die Verbindungsmittel ein Lager vom Typ eines horizontalen Drehkranzes umfassen, der die Drehung der Plattform um eine vertikale Achse zulässt und/oder wobei die Verbindungsmittel eine vertikale mit der Plattform mittels einer Kugelgelenkverbindung verbundene Übertragungswelle umfassen, die die vertikale Translation der Plattform gestattet und/oder wobei die Verbindungsmittel ein oder mehrere Stoßdämpfungsmittel umfassen.

7. System zur Unterstützung von Bodenbewegungen nach einem der vorangehenden Ansprüche, wobei die Kopplungsmittel für das Greifen und Freigeben des Fahrwerks des Flugzeugs und/oder eines Elements des Flugzeugrumpfs ausgelegt sind.

8. System zur Unterstützung von Bodenbewegungen nach einem der vorangehenden Ansprüche, wobei das System zusätzlich einen Rettungswagen umfasst, der die Unterstützungsinstrumente im Falle eines Unfalls oder Brands des Flugzeugs mitnimmt.

9. System zur Unterstützung von Bodenbewegungen nach einem der vorangehenden Ansprüche, wobei der Wagen zusätzlich Elektroenergieversorgungsmittel des Luftfahrzeugs umfasst.

10. System zur Unterstützung von Bodenbewegungen nach einem der vorangehenden Ansprüche, wobei das System zusätzlich ein Steuerungsmodul umfasst, das sich für die Bewegung des Wagens und/oder die Ausrichtung der Plattform fernsteuern lässt.

11. System zur Unterstützung von Bodenbewegungen nach einem der vorangehenden Ansprüche, wobei das System dafür ausgelegt ist, das Flugzeug bis hin zu und von einer Abstellposition weg zu transportieren.

12. Bodenunterstützungsverfahren für das Landen eines Luftfahrzeugs, insbesondere eines Flugzeugs, mit einem System nach einem der Ansprüche 1 bis 11, wobei das Verfahren die folgenden Schritte umfasst:
Platzieren des Wagens am Bahnende mit den Verbindungsmitteln in der Ausgangsposition mit der horizontalen Plattform;
Beschleunigen des Wagens gemäß einer geraden Linie bis auf eine Geschwindigkeit, die der Landegeschwindigkeit des Flugzeugs entspricht;
Stabilisieren des Wagens auf die gleiche Geschwindigkeit wie das Flugzeug;
Steuern der Verbindungsmittel, um die Plattform unter das Flugzeug zu bewegen;
Steuern der Verbindungsmittel, um die Kopplungsmittel in Kontakt mit den korrespondierenden Elementen des Flugzeugs zu bringen;
Greifen des Flugzeugs mit den Kopplungsmitteln;
Steuern der Verbindungsmittel in die Ausgangsposition, um das Flugzeug auf einer horizontalen Ebene zu platzieren;
Abbremsen des Flugzeugs bis auf eine Fahrgeschwindigkeit auf der Bahn.

13. Bodenunterstützungsverfahren für das Landen eines Luftfahrzeugs nach Anspruch 12, wobei das Verfahren zusätzlich den folgenden Schritt umfasst:
nachdem das Flugzeug bis auf eine Fahrgeschwindigkeit auf der Bahn abgebremst wurde, Übergehen zum Abstellen des Flugzeugs, indem der Wagen mit der Fahrgeschwindigkeit bis zu einer Abstellzone angetrieben wird.

14. Bodenunterstützungsverfahren für das Starten eines Luftfahrzeugs, insbesondere eines Flugzeugs, mit einem System nach einem der Ansprüche 1 bis 11, wobei das Verfahren die folgenden Schritte umfasst: Platzieren des Wagens am Bahnende mit den Verbindungsmitteln in der Ausgangsposition, mit der horizontalen Plattform und dem an den Kopplungsmitteln befestigten Flugzeug;
Beschleunigen des Wagens gemäß einer geraden Linie bis auf eine Geschwindigkeit, die der Startgeschwindigkeit des Flugzeugs entspricht;
Steuern der Verbindungsmittel, um das Flugzeug in eine Startposition zu neigen;
nachdem die Startgeschwindigkeit erreicht wurde, Freigeben des Flugzeugs durch die Kopplungsmittel.

15. Bodenunterstützungsverfahren für das Starten eines Luftfahrzeugs nach Anspruch 14, wobei das Verfahren zusätzlich den folgenden Schritt umfasst:
nach dem Start des Flugzeugs, weiteres Fortbewegen des Wagens unter dem Flugzeug, um eine Landung im Falle eines Unfalls vornehmen zu können.

## Claims

1. A ground maneuver assistance system for aircraft, more particularly for aeroplanes, the system comprising:
a carriage driven on a runway by a drive means, the speed of which may be adapted to the landing or take off speed of the aeroplane,
the carriage comprising a chassis configured to move on the runway;
a mobile platform configured to support the aeroplane, the platform comprising coupling means configured to engage and release the aeroplane;
and means for connecting the platform to the chassis, configured to create relative movement between the platform and the chassis;
**characterized in that**
the connection means enable translational maneuvering of the platform, in at least one vertical direction and one transverse direction relative to the travel of the carriage;
and **in that** the connection means also allow rotation of the platform in space along three perpendicular axes of rotation, so as to orient the platform in a plane corresponding to the take off or landing angle of the aeroplane.

2. The ground maneuver assistance system as claimed in claim 1, in which the carriage is connected removably to the drive means.

3. The ground maneuver assistance system as claimed in claim 2, in which the drive means comprise an electric locomotive which pushes or hauls the carriage.

4. The ground maneuver assistance system as claimed in any one of the preceding claims, in which the system further comprises rails installed on the runway, and the chassis of the carriage travels on the rails.

5. The ground maneuver assistance system as claimed in any one of the preceding claims, in which the carriage is driven by magnetic induction.

6. The ground maneuver assistance system as claimed in any one of the preceding claims, in which the connection means comprise at least one onboard rail, and a system allowing the platform to be transported on the rail, translationally in a transverse direction relative to the travel of the carriage, and/or in which the connection means comprise at least three hydraulic or pneumatic actuators connected to the platform at three separate points and allowing rotational orientation of the platform, and/or in which the connection means comprise a bearing of the horizontal slewing type which permits rotation of the platform about a vertical axis, and/or in which the connection means comprise a vertical transmission shaft connected to the platform by a ball joint coupling, which enables vertical translational motion of the platform, and/or in which the connection means comprise one or more shock-absorbing means.

7. The ground maneuver assistance system as claimed in any one of the preceding claims, in which the coupling means are arranged for engaging and releasing the landing gear of the aeroplane and/or an aeroplane fuselage component.

8. The ground maneuver assistance system as claimed in any one of the preceding claims, in which the system further comprises an emergency vehicle which transports assistance tools in the event of an aeroplane accident or fire.

9. The ground maneuver assistance system as claimed in any one of the preceding claims, in which the carriage further comprises means of supplying electrical energy to the aircraft.

10. The ground maneuver assistance system as claimed in any one of the preceding claims, in which the system further comprises a control module which can be controlled remotely to maneuver the carriage and/or orient the platform.

11. The ground maneuver assistance system as claimed in any one of the preceding claims, in which the system is arranged for transporting the aeroplane to and from a parked position.

12. A ground assistance method for landing an aircraft, more particularly an aeroplane, having a system as claimed in any one of claims 1 to 11, the method comprising the steps of:
placing the carriage at the end of the runway with the connection means in the initial position with the platform horizontal;
accelerating the carriage in a straight line up to a speed corresponding to the landing speed of the aeroplane;
matching the carriage's speed to that of the aeroplane;
controlling the connection means so as to maneuver the platform under the aeroplane;
controlling the connection means so as to bring the coupling means into contact with the corresponding components of the aeroplane;
engaging the aeroplane with the coupling means;
controlling the connection means in the initial position, so as to place the aeroplane on a horizontal plane;
braking the aeroplane down to a taxiing speed on the runway.

13. The ground assistance method for landing an aircraft, as claimed in claim 12, the method further comprising the step of:
once the aeroplane has been braked down to a taxiing speed on the runway, parking the aeroplane by driving the carriage at the taxiing speed as far as a parking zone.

14. A ground assistance method for take off of an aircraft, more particularly an aeroplane, having a system as claimed in any one of claims 1 to 11, the method comprising the steps of:
placing the carriage at the end of the runway with the connection means in the initial position, with the platform horizontal, and the aeroplane fixed to the coupling means;
accelerating the carriage in a straight line up to a speed corresponding to the take off speed of the aeroplane;
controlling the connection means so as to incline the aeroplane into the take off position;
once the take off speed has been reached, releasing the aeroplane using the coupling means.

15. The ground assistance method for take off of an aircraft, as claimed in claim 14, the method further comprising the step of:
after take off of the aeroplane, continuing to maneuver the carriage under the aeroplane so as to be able to carry out landing in case of accident.
